Europäisches Patentamt

European Patent Office

Office européen des brevets

(19)

(11) Publication number: **0 331 419**
**A2**

## (12) EUROPEAN PATENT APPLICATION

(21) Application number: **89301959.6**

(22) Date of filing: **28.02.89**

(51) Int. Cl.⁴: **C08J 3/20**

(30) Priority: **29.02.88 US 161873**

(43) Date of publication of application:
**06.09.89 Bulletin 89/36**

(84) Designated Contracting States:
**AT BE CH DE ES FR GB GR IT LI LU NL SE**

(71) Applicant: **SHELL OIL COMPANY**
**900, Louisiana Street**
**Houston Texas 77002(US)**

(72) Inventor: **Chatterjee, Amanda M.**
**14411 Locke Lane**
**Houston Texas 77077(US)**
Inventor: **Wilpers, Dale James**
**18110 Longmoor**
**Houston Texas 77084(US)**

(74) Representative: **Myerscough, Philip Boyd et al**
**J.A.Kemp & Co. 14, South Square Gray's Inn**
**London, WC1R 5EU(GB)**

(54) Post-reactor stabilization of polymers.

(57) The present invention provides an at least partially coated polymer particle comprising a core of at least one polymer and at least one coating comprising an additive and a wax.

The invention further provides a process A process for providing post-reactor stabilization of a polymer which comprises i) melting a wax; ii) blending at least one additive into the liquid wax; iii) fluidizing particles of the polymer to be stabilized with a hot gas; iv) spraying the liquid wax containing at least one additive on the fluidizing particles such that at least partially coated polymer particles are formed; and

v) maintaining the at least partially coated polymer particles at a temperature which is sufficiently high to prevent the formation of fibers from the wax and which enhances the formation of stabilized polymer particles.

EP 0 331 419 A2

## "POST-REACTOR STABILIZATION OF POLYMERS

This invention relates to a method of producing stabilized or additive-containing polymers which do not need extrusion pelletization. This invention also relates to novel coated polymer particles, which can be directly sold to customers without pelletization.

The present invention also relates to an improved process for incorporating stabilizers and other additives into polymers after polymerisation. The process reduces the cost and the steps currently required for adding stabilizers and additives to polymers. The novel method for adding stabilizers after polymerisation allows an additive to be incorporated into the polymer in such a way that futher extrusion pelletization of the polymer can be eliminated and a stabilized polymer results, in particle form.

In this invention, particles of a polymer, preferably an olefin polymer, are coated with a blend of an additive and a wax carrier or vehicle. Relatively low molecular weight of the carrier is desirable.

The method hitherto employed for incorporating dry additives into polymers involves blending the polymer with the additive using an extruder, Banbury mixer or other mixing apparatus. Disadvantages of such techniques include appreciable downtime for cleaning of the blending equipment, high electricity costs of running the extruders, and maintenance costs.

Amongst prior disclosures of methods for blending additives with polymers, US-A-3,591.409 describes preparing a composition by high intensity mechanical blending of a mixture of particulate thermoplastic resin, hydrocarbon wax, and particulate solid material at high temperatures. This method requires that all ingredients be placed in the mixer at once, without separate pretreatment of any one of the components of the mixture.

US-A-3,271,185 discloses a process for stabilizing polymers wherein a vaporizable antioxidant is added in a fluidized bed to the polymer. JP-A-59/150719 describes a process where polypropylene is mixed at a high velocity with a stabilizer whose melting temperature must be below 162°C. US-A-4,452,928 discloses the use of solvents which must be removed after adding the stabilizer to the polymer. The teaching suggests that the polymer be purified and the solvent recycled to obtain good results from the disclosed process. EP-B-200,684 discloses the stabilization of spherical polyolefins by treatment with emulsion or dispersion containing stabilizers and certain amines. Emulsifiers, such as sorbitan monooleate, are used in the process. The sorbitan monoleate remains in the resultant polypropylene.

It has long been desired to find a method of cheaply blending additives into polymers without having in addition to compound the polymer with the additive using energy-intensive mixers like extruders, and without resorting to a process requiring the use of solvents.

It has now been discovered that a formulation can be prepared which comprises additives and a molten wax and the mixture can be sprayed onto the polymer particles (to be stabilized) through a fluidized bed coating technique, wherein the polymer is partially coated and discrete particles are formed. This process has lower energy and capital cost requirements than the single or twin-screw extrusion technology.

Accordingly, the present invention provides an at least partially coated particle comprising a core of at least one polymer, and at least one coating comprising an additive and wax.

The present invention also provides a process for providing post-reactor stabilization of a polymer which comprises

i) melting a wax;

ii) blending at least one additive into the liquid wax;

iii) fluidizing particles of the polymer to be stabilized with a hot gas;

iv) spraying the liquid wax containing at least one additive on the fluidized polymer particles such that at least partially coated polymer particles are formed; and

v) maintaining the at least partially coated polymer particles at a temperature which is sufficiently high to prevent the formation of fibers from the wax and which enhances the formation of stabilized polymer particles.

In one embodiment, the wax is an olefin homopolymer derived from a $C_2$-$C_{18}$ olefin, such as a polypropylene wax.

In another embodiment, the polymer to be stabilized is a homopolymer derived from a $C_2$-$C_{18}$ olefin or a copolymer derived from such an olefin and at least one $C_2$-$C_{18}$ comonomer.

The present invention includes a novel process for adding stabilizers to solid polypropylene particles which comprises

(i) melting a polypropylene wax;

(ii) blending at least one additive into the liquid polypropylene wax;

2

(iii) fluidizing with a hot gas particles of polypropylene which is to be stabilized;

(iv) spraying the liquid polypropylene wax containing at least one additive on the polypropylene particles such that at least partially coated particles of polypropylene are formed; and

(v) maintaining the at least partially coated particles of polypropylene and fluidized polypropylene particles at a temperature which is sufficiently high to prevent the formation of fibers from the wax and enhances the formation of stabilized polypropylene particles.

The novel coated particle formed in the present invention is prepared such that it comprises a core of polymer and a coating which comprises a blend of a wax and a stabilizer component. The coating suitably comprises a $C_2$-$C_{18}$ polyolefin wax and an additive such as an antioxidant, processing stabilizer, acid acceptor, nucleating agent, metal deactivating agent, thermal stabilizer, light or ultraviolet stabilizer, antiblock agent or antistatic agent. The coated particle suitably comprises more than one additive. Besides those noted above, lubricant and slip agents which are capable of enhancing the properties and processability of the polymer may be used.

Examples of other additives which are suitable include fillers, such as talc, barium sulfate, clays, calcium carbonate, silicates, and mica, pigments, such as titanium dioxide, carbon black, lead chromate, cadmium sulfide, cadmium selenide, and zinc sulfide; stabilizers such as basic lead carbonate, tribasic lead sulfate, basic lead chlorosilicate, dibutyl tin oxide and other salts of lead, zinc, cadmium, tin, and the like; flame retardants such as antimony oxide; and any other additives which enhance the properties and processability of the polymer to which they are to be added. The amount of additive typically ranges from 0.01 to 20% of the total weight of the coated particle.

The outer coating of the particle suitably comprises, in addition to one or more of the additives listed above, at least one homopolymer or copolymer derived from a $C_2$-$C_{18}$ monomer. Examples of such monomers include propylene and 1-butene. The outer coating is typically prepared from one or more of the additives listed above together with a carrier polymer component. The carrier polymer suitably has a relatively low molecular weight and is, typically, a wax. Suitable examples include polypropylene wax which has a weight average molecular weight of 10,000 to 30,000, and is primarily isotactic, such as Hoechst Wax PP230. An olefin polymer derived from a $C_2$-$C_6$ monomer unit is particularly suitable for use in the outer coating, although polyolefins derived from monomers having up to 30 carbon atoms are also suitable.

Examples of olefin polymers suitable for the outer coating include polyethylene, polypropylene, polybut-1-ene, copolymers of ethylene and propylene, copolymers of propylene and but-1-ene, copolymers of ethylene with at least one other olefin containing from 2 to 18 carbon atoms, for example from 2 to 8 carbon atoms; copolymers of propylene with at least one other olefin containing from 2 to 18 carbon atoms, for example from 2 to 8 carbon atoms, and copolymers of but-1-ene with at least one other olefin containing from 2 to 18 carbon atoms, for example from 2 to 8 carbon atoms.

The olefin polymer component used in the coating layer is suitably a blend of two or more olefin polymers each derived from $C_2$-$C_{18}$ monomers. Examples include a blend of polypropylene and polyethylene, and a copolymer or terpolymer of such monomers.

The olefin polymer material selected for the outer coating should not cause colouration, staining, or degradation of the base polymer in which the additives are incorporated. The olefin polymer of the outer coating can remain in the final polymer product.

A further additive can be used in combination with the additives listed above. The further additive is suitably a high molecular weight polymer, which typically is compatible with the wax. The weight average molecular weight suitably ranges from 50,000 to $10^6$ and the further additive is typically used in an amount of from 0.001 to 0.005%, for example 0.0025% of the total weight of the wax. Suitable examples include polyisobutylene, having an average molecular weight of 50,000, and polymethyl methacrylate having an average molecular weight of 850,000.

The wax carrier of the additives can be either natural or synthetic. Typical examples include hydrocarbon waxes, such as polypropylene wax, polyethylene wax, and paraffin wax, ester waxes such as spermaceti, mineral waxes, such as montan wax, amide waxes such as ethylene distearamide and ethylene diresorcinolamide, halogenated hydrocarbon waxes, such as chlorinated paraffin waxes and chlorinated naphthalenes, and ketone waxes, such as stearone.

The melting point of the wax carrier should be sufficiently high for the outer coating to remain solid and firm at room and storage temperatures. For the convenience of additive incorporation in the polymer particles during post-reactor blending, a melting point of from 50°C to 210°C is suitable.

Waxes and wax-like materials are generally employed as the carrier of the additive either alone or in mixtures. A particularly suitable carrier material is isotactic polypropylene wax. The carrier is melted before being used for the post-reactor stabilization process. The molten polyolefin wax can then be applied to the

3

polymer particles to be stabilized by a spraying or atomization operation.

One or more coatings are applied to the polymer particles by spraying or any other non-extrusion technique. For example, the polymer particles are fluidized using hot air and then atomized melted wax (containing additives) is contacted with the particles for time periods ranging from 0.5 to 20 minutes. Alternatively, the polymer particles are fluidized using an inert gas such as nitrogen. It is then possible to add further wax coatings to the at least partially coated sresultant particle such that larger sized particles are formed.

The coated polymer particles are typically kept fluidized with the hot air or other gas until the incorporation of additives is complete. It is within the scope of this invention for the fluidized and at least partially coated paticles to be heated externally.

The use of coatings comprising polypropylene wax and selected additives on polypropylene particles has led to good results. The coating material provides a polymer that is easy to process, which is an advantage of the invention.

The polymer to bs coated, referred to herein as the core of the particle, is suitably isotactic polypropylene.

Examples of other suitable base polymers include chlorosulfonated polyethylene, ethylene-propylene copolymer rubbers, ethylene-propylene-diene terpolymers; butyl, butadiene-styrene, silicone and acrylonitrile rubbers. Polyvinyl chloride polymers and copolymers, polyethylene and copolymers thereof, polypropylene, polyvinylidene chloride, polystyrene, polyimides, polyamides, polyacetals, acrylonitrile-butadiene-styrene, polycarbonates, chlorinated polyethylene, polymethyl-methacrylate, polyaromatic sulfones, and the like may also be usable herein. The average size of the core of the particle generally ranges from about 300 micrometers to about 5 millimeters. Typically, cores having an average particle size of from 600 micrometers to 3 millimeters are used.

The novel wax-coated polymer particles will reduce the abrasion of processing equipment by solid additives, thereby reducing undue wear and erosion of metal surfaces in contact with the final resin composition. Metal contamination caused by abrasion is a serious source of discoloration and degradation of the resins and the use of this novel coated additive reduces the magnitude of the problem.

The process of the present invention can be employed to advantage to produce coated, stabilized resin particles, such as polypropylene, containing additives, efficiently and with the minimum expenditure of man hours and minimum equipment costs. The stabilized coated polymer particles produced in accordance with this invention are directly saleable to customers, and are relatively dust-free, without the presence, to any significant extent, of fines. The fact that the coated polymer particles can minimize the dusting tendencies of polypropylene means that the generation of explosive dusts is prevented.

It is also within the scope of the present invention for additional coatings to be disposed on the initially coated particles. The additional coatings can be used to increase the particle size of the core polymer. Examples of typical materials used in a second coating on the particle included meltable stabilizers. Butylated hydroxytoluene is a suitable second coating.

It is also within the invention to use agglomerated particles which form when the individual coated particles join together. Additionally, a coated particle may become at least partially covered with fines forming a fine-covered coated particle which may be used in the invention.

The following examples further illustrate the invention. Both Examples 1 and 2 will illustrate that the coated polypropylene has a significant oxidative stability, thus demonstrating effective stabilizer incorporation. The Comparative Examples will illustrate that the contribution of the Hoechst wax used to overall stability is negligible. This indicates that the stability of the samples used in Examples 1 and 2 is due to the incorporation of stabilizers by the particular fluidized bed coating technique.

All parts and percentages quoted in the Examples are by weight unless otherwise specified.

EXAMPLES 1 AND 2

Preparation of coating mixture

The stabilizer mixture used comprised "Irganox" 3114 (Ciba-Geigy) and ZnO (New Jersey Zinc Co.) in a mass ratio of 10:4. This mixture was dispersed (slurried) by stirring in molten polypropylene wax at 204.5°C (400°F). The polypropylene wax used was Hoechst Wax polypropylene 230 supplied by American Hoechst Corporation. This is predominantly an isotactic polypropylene homopolymer with a weight of about 25,000, a softening point (Ring and Ball) of about 158°C and a viscosity at 180°C of about 1 Pa s. In Example 1, 13 g of the stabilizer mixture was dispersed in 130 g of polypropylene wax. In Example 2, 2 g of the stabilizer mixture was dispersed in 225 g of polypropylene wax.

## Coating of Particles

Fluidized bed coating experiments were conducted at Coating Place inc., Verona, Wisconsin, A scheme and description of the coating process is described in H.S. Hall and R. E. Pondell, Chapter 7 in "Controlled Release Technologies: Methods, Theory and Applications", Volume II, A.F. Kydonieus, Ed, CRC Press, Boca Raton, FL, 1980. Unstabilized polypropylene homopolymer powder (produced by SHAC[R] 103 catalyst) having an average particle size of 610μm and nominal 3 melt flow (ASTM D1238 condition L) was coated in a fluidized bed by a mixture of stabilizers and PP wax in a batch operation. The polypropylene wax served as a carrier of the additives to be incorporated into the base PP.

The dispersion of stabilizer and molten wax was sprayed or atomized by air upward through a heated nozzle onto a fluidized bed of unstabilized polypropylene particles. The nozzle was located at the base of the fluidized bed. The atomizing fluid, which was air, broke up the additive-containing molten wax into numerous droplets which were deposited onto the solid polypropylene particles.

The coating chamber used was conical, with a 10.16cm (4-inch) diameter at the bottom and a 15.2cm (6-inch) diameter at the top. The stabilizer/wax mixture was delivered to the nozzle by a heated Zenith gear pump (1.75 cc/rev). There were two filters at the top of the chamber, in order to keep the fluidized polypropylene powder from blowing out. The coating conditions and test results for both examples are shown in Table 1. The fluidizing air temperature was controlled as indicated, in order to avoid fiber formation from the polypropylene wax.

In Example 1, the fluidized bed initially contained 1500 g unstabilized polypropylene powder, onto which 18.5 g of the stabilizer/wax mixture was sprayed during the 5.8 minute coating run. This resulted in 1% polypropylene wax in the final stabilized polypropylene resin.

In Example 2 the fluidized bed initially contained 1500 g of unstabilized polypropylene powder onto which 168 g of the stabilizer/wax mixture was sprayed in a 14.5 minute coating run.

This resulted in 10% polypropylene wax in the final stabilized polypropylene resin.

## Measurement of thermo-oxidative stability

After the fluidization bed coating was over, the polypropylene samples were compression molded into 0.254 mm (10 mil) thick plaques for thermo-oxidative stability measurement. Two methods were used, hot air oven aging and oxidative induction time or OIT. The longer oven life or OIT values indicate greater oxidative stability of the polypropylene.

In the first method 5.08 cm x 6.35 cm (2 in x 2.5 in) polypropylene plaques were aged in a forced circulation hot air oven maintained at 125° C, following the guidelines of ASTM D3012. The samples were inspected regularly, until failure was indicated by characteristic brittleness and powdery disintegration of the polypropylene.

The OIT's were measured by a differential scanning calorimeter (Perkin Elmer model DSC 2), in which the polymer melt was oxidized by oxygen. In this test about 5 mg of the compression-molded polypropylene sample was crimped in the DSC. The sample was heated to the test temperature under nitrogen, and then the nitrogen gas was replaced by oxygen. From this time (t = O) onward, scanning was done in the time mode. A tangent was drawn to the exothermic oxidation peak. The intersection of this tangent with the initial baseline, measured from t = O, gave the oxidative induction time or OIT.

The results are shown in Table 1.

## Comparative Examples 1 and 2

Unstabilized polypropylene containing 1% and 10% respectively of Hoechst Wax polypropylene 230 was prepared, compression-molded and tested by the procedures according to Examples 1 and 2.

EP 0 331 419 A2

TABLE 1

| FLUIDIZED BED COATING RUN CONDITIONS AND PP STABILITY TEST RESULTS | | | | | | |
|---|---|---|---|---|---|---|
| PP Sample | Fluidizing air temp $°C/(°F)$ | | Pressure of atomizing air kPa (psi) | Flow rate of atomizing air $m^3/s$ (SCFH) | Wax line temp $°C(°F)$ | Nozzle temp. $°C(°F)$ |
| | in | out | | | | |
| Example 1 | 142.7(289) | 75 (167) | 137.8 (20) | $7.00 \times 10^{-4}$(89) | 237.7(460) | 176.7 (350) |
| Example 2 | 141.7(287) | 85.6 (186) | 137.8 (20) | $6.68 \times 10^{-8}$(460) | 237.7(460) | 171.1 (340) |
| Comparative Example 1 | - | - | - | - | - | - |
| Comparative Example 2 | - | - | - | - | - | - |
| PP Sample | Nominal stabilizer conc (ppm) in PP | % Wax in PP | Oven life (days) at 125°C | OIT (min) at 190°C | | |
| Example 1 | 1171 | 1 | >200 | >20 | | |
| Example 2 | 1000 | 10 | >200 | >20 | | |
| Comparative Example 1 | 0 | 0 | < 1 | < 1 | | |
| Comparative Example 2 | 0 | 0 | < 1 | 1.3 | | |

## Claims

1. An at least partially coated polymer particle comprising a core of at least one polymer and at least one coating comprising an additive and a wax.

2. A particle according to Claim 1 wherein the core comprises a homopolymer derived from a $C_2$-$C_{18}$ olefin or a copolymer derived from at least one $C_2$-$C_{18}$ comonomer.

3. A particle according to Claim 2, wherein the core comprises polypropylene, polybutylene or polyethylene.

4. A particle according to any one of Claims 1 to 3 wherein the wax is an olefin polymer derived from at least one $C_2$-$C_{18}$ olefin.

5. A particle according to Claim 4, wherein the wax is a polybutylene wax, polypropylene wax, or polyethylene wax.

6. A particle according to any one of the preceding claims wherein the additive is an antioxidant, processing stabilizer, acid acceptor, nucleating agent, metal deactivating agent, thermal stabilizer, light stabilizer, lubricant, antiblock agent, antistatic agent, slip agent, filler, talc, barium sulfate, clay, calcium carbonate, silicate, mica, pigment, titanium dioxide, carbon black, lead chromate, cadmium sulfide, cadmium selenide, zinc sulfide, stabilizer, basic lead carbonate, tribasic lead sulfate, basic lead chlorosilicate, dibutyl tin oxide and other salts of lead, zinc, cadmium, tins, a flame retardant, antimony oxide, or any other additive which enhances the properties and processability of the polymer to which it is to be added.

7. A particle according to any one of the preceding claims which comprises at least one further coating disposed on the first coating, at least one of which is of a meltable stabilizer.

8. A particle according to any one of the preceding claims wherein the core has an average particle size of from 300 micrometers to 5 millimeters.

9. A process for providing post-reactor stabilization of a polymer which comprises

i) melting a wax;

ii) blending at least one additive into the liquid wax;

iii) fluidizing particles of the polymer to be stabilized with a hot gas;

iv) spraying the liquid wax containing at least one additive on the fluidizing particles such that at least partially coated polymer particles are formed; and

v) maintaining the at least partially coated polymer particles at a temperature which is sufficiently high to prevent the formation of fibers from the wax and which enhances the formation of stabilized polymer particles.

10. A process according to Claim 9, wherein the hot gas used for fluidization of the polymer particles comprises heated air, heated inert gas, or a heated mixture thereof.

11. A process according to Claim 9 or 10, wherein the liquid wax is at a temperature from 50° C to 210° C.

12. A process according to any one of Claim 9 to 11, wherein the liquid wax has a residence time with the fluidized polymer particles of from 0.5 minutes to 20 minutes.

13. A process according to any one of Claims 9 to 12, wherein the at least partially coated particles produced are particles as claimed in any one of Claims 1 to 8.